(19)

Europäisches
Patentamt
European
Patent Office
Office européen
des brevets

(11) **EP 3 812 808 A1**

(12) **EUROPEAN PATENT APPLICATION**
published in accordance with Art. 153(4) EPC

(43) Date of publication:
**28.04.2021 Bulletin 2021/17**

(21) Application number: **18923686.2**

(22) Date of filing: **25.12.2018**

(51) Int Cl.:
**G02B 6/12** *(2006.01)*

(86) International application number:
**PCT/CN2018/123421**

(87) International publication number:
**WO 2019/242267 (26.12.2019 Gazette 2019/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **20.06.2018 CN 201810637390**

(71) Applicant: **Accelink Technologies Co., Ltd.
Wuhan City, Hubei 430205 (CN)**

(72) Inventors:
• **WU, Fan
  Wuhan City, Hubei 430205 (CN)**
• **LING, Jiuhong
  Wuhan City, Hubei 430205 (CN)**
• **LI, Changan
  Wuhan City, Hubei 430205 (CN)**
• **HU, Jiayan
  Wuhan City, Hubei 430205 (CN)**
• **KONG, Xiangjian
  Wuhan City, Hubei 430205 (CN)**

(74) Representative: **Frenkel, Matthias Alexander
Wuesthoff & Wuesthoff
Patentanwälte PartG mbB
Schweigerstraße 2
81541 München (DE)**

(54) **ATHERMAL ARRAYED WAVEGUIDE GRATING MODULE AND WIDE TEMPERATURE COMPENSATION METHOD**

(57) Provided are an athermal arrayed waveguide grating (AWG) module and a wide temperature compensation method. The athermal arrayed waveguide grating module comprises: an AWG chip (10), on the back surface of which a metal electrode (12) is arranged; a temperature regulation control device, which is electrically connected to the metal electrode (12), and used for calculating the working temperature of the AWG chip (10) by means of the resistance value of the metal electrode (12), and, within a preset temperature range of an industrial temperature range, adjusting the working temperature of the AWG chip (10) to a target temperature or maintaining it within a predetermined range of the target temperature. Temperature adjustment control is performed for chip-scale AWG components within a preset temperature range of an industrial temperature range, resulting in a lower power consumption and a faster response speed, such that the control precision of wavelength drift can be adapted to a wider temperature range, and meet the needs of industrial applications.

Fig. 1

EP 3 812 808 A1

**Description**

CROSS-REFERENCE

The present disclosure claims a benefit of, and priority to Chinese Patent Disclosure No. 201810637390.1 filed on June 20, 2018, the disclosure of which is hereby expressly incorporated by reference herein in its entirety.

TECHNICAL FIELD OF THE DISCLOSURE

The embodiments of the present disclosure relate to the field of optical devices, in particular to an athermal arrayed waveguide grating module and a wide temperature compensation method.

BACKGROUND

Arrayed Waveguide Gratings (AWG) are optical devices based on planar optical waveguides, composed of input waveguides, input slab waveguides, arrayed waveguides, output slab waveguides, and output waveguides, wherein adjacent arrayed waveguides have a fixed length difference between them. As the key optical component of the dense wavelength division multiplexing system (also referred to WDM system hereinafter), AWG has the advantages of high integration, large number of channels, low insertion loss, and being easy for mass automated production and so on. The AWG dense wavelength division multiplexing system has high requirements for the stability of center wavelength of the multiplexing/demultiplexing device, where the center wavelength accuracy needs to be controlled within +/-5% of a channel interval, and usually in the division multiplexing system having 100GHz, 50GHz and 25GHz intervals, the center wavelength accuracy needs to be controlled within +/-0.04nm, +/-0.02nm and +/-0.01nm respectively. However, the conventional silicon-based AWG chips are sensitive to temperatures. Generally, the center wavelength drift with temperature is 0.0118nm/°C. Within a working environment temperature of the WDM system (-40°C to 85°C), the center wavelength drift of the AWG chip obviously exceeds the system requirements. Therefore, measures need to be taken to control the center wavelength of the AWG chip, so that it can work normally within the working environment temperature. The commonly used method is to use a heating plate and a temperature control circuit to maintain the chip temperature at a certain constant value, and usually the temperature needs to be controlled above 65°C.

An athermal AWG (Athermal AWG, AAWG for short) technology is a commonly used technology for controlling center wavelength. The athermal AWG uses a temperature compensation technology to keep the wavelength stable, wherein the chip-level athermal AWG solution is different from the principle for compensating the wavelength drift with temperature by taking use of the principle of thermal expansion and contraction of a temperature-driven rod to drive relative displacement. The most common method in the prior implementation method is to add a part of negative thermal coefficient materials into an optical path of the chip, such as silicone, polymer, and ultraviolet glue materials, the thermo-optical coefficient of which is opposite to that of silicon dioxide material, thereby the influences of temperature on the two materials are mutually canceled, through which the temperature-dependent drift of the AWG center wavelength with temperature is compensated. Filling materials with negative thermal coefficients usually have a negative optical path variation value for temperature that is several tens of times larger than that of SiO2-based waveguides. Therefore, the working temperature-related characteristics of the athermal AWG module made by this solution are only one-tenths of that of the SIO2-based AWG chip.

The wavelength accuracy of the prior chip-level athermal AWG technology is mainly reflected in that the wavelength-temperature-dependent characteristics could only be suppressed within a commercial temperature region, such as -5 to 65°C. For industrial level athermal AWG chips, it is necessary to etch more than one triangular groove, which is difficult to process, and due to the chip process itself, the yield will be lower than that of the prior art. Therefore, there is an urgent need for a solution which enables chip-level AWG modules to work in a wide temperature range (-40 to 85°C) with low power consumption and the center wavelength to meet the requirements of 50G, 25G and even denser WDM systems.

SUMMARY

In view of the problems existing in the prior art, embodiments of the present disclosure provide an athermal arrayed waveguide grating module and a wide temperature compensation method.

In the first respect, an embodiment of the present disclosure provides an athermal arrayed waveguide grating module comprising:

an AWG chip, on a back surface of which a metal electrode is provided;
a temperature adjustment control device, which is electrically connected to the metal electrode, and is used to calculate a working temperature of the AWG chip based on a resistance value of the metal electrode, and within a preset temperature range of an industrial temperature range, to adjust the working temperature of the AWG chip to a target temperature or maintain it within a predetermined range of the target temperature.

In the athermal arrayed waveguide grating module provided by the embodiment of the present disclosure, the temperature adjustment control device can calculate the working temperature of the AWG chip through the resistance value of the metal electrode which is provided on the back surface of the AWG chip and is connected to the temperature adjustment control device, and then can uniformly heat or cool the entire AWG chip, so as to realize the temperature adjustment and monitoring of the chip-level AWG module.

In the second respect, another embodiment of the present application provides a wide temperature compensation method based on the athermal arrayed waveguide grating module of the first respect, comprising:

acquiring a compensation state of the athermal arrayed waveguide grating module within an industrial temperature range;

based on the compensation state, when an ambient temperature is within a preset temperature range, adjusting a working temperature of the AWG chip to a target temperature or maintaining it within a predetermined range of the target temperature by the temperature adjustment control device of the athermal arrayed waveguide grating module; wherein the preset temperature range is a temperature range within the industrial temperature range.

In the wide temperature compensation method for an athermal arrayed waveguide grating module provided in the embodiment of the present disclosure, based on different compensation states of the athermal arrayed waveguide grating module in the industrial temperature range, when the athermal arrayed waveguide grating module is in a preset temperature range within the industrial temperature range, the working temperature of the AWG chip is adjusted to the target temperature or maintained within a predetermined range of the target temperature by the temperature adjustment control device of the athermal arrayed waveguide grating module. For the temperature adjustment control of the chip-level AWG assembly in the industrial temperature range, compared to a mode that an thermal AWG is required to thermostatically process the entire module within the entire working temperature range, in the method of the embodiment of the present disclosure, the process is performed within the preset temperature range, resulting in a lower power consumption and a faster response speed, such that the control accuracy of wavelength drift can adapt to a wider temperature range and meet the needs of industrial applications.

BRIEF DESCRIPTION OF THE DRAWINGS

For a clearer statement of the embodiments of the present disclosure or the technical solutions in the prior art, the drawings needed in the description of the embodiments or the prior art will be briefly introduced hereinafter. Obviously, the drawings hereinafter are some embodiments of the present disclosure. For those of ordinary skill in the art, other drawings can be obtained based on these drawings without any creative work.

Fig. 1 is a schematic diagram of the structure of an athermal arrayed waveguide grating module according to an embodiment of the present disclosure;
Fig. 2 is a schematic diagram of the back surface of an athermal arrayed waveguide grating according to an embodiment of the present disclosure;
Fig. 3 is a schematic flowchart of a wide temperature compensation method for an athermal arrayed waveguide grating module according to an embodiment of the present disclosure;
Fig. 4 is a schematic diagram of wavelength drift curve of an arrayed waveguide grating module of the prior art in an industrial temperature range;
Fig. 5 is a schematic diagram of comparison of wavelength drift curves in an over-compensation state within an industrial temperature range before and after wide temperature compensation according to an embodiment of the present disclosure;
Fig. 6 is a schematic diagram of comparison of wavelength drift curves in an under-compensation state within an industrial temperature range before and after wide temperature compensation according to the embodiment of the present disclosure;
Fig. 7 is a schematic diagram of comparison of wavelength drift curves in a symmetrical compensation state within an industrial temperature range before and after wide temperature compensation according to an embodiment of the present disclosure;
in the drawings,

10. AWG chip, 11. triangular slot,

12. metal electrode, 13. input fiber array,
14. output fiber array, 20. optical path base,
21. circuit control portion.

DETAILED DESCRIPTION

For a clearer understanding of the objectives, technical solutions and advantages of embodiments of the present disclosure, the technical solutions defined in embodiments of the present disclosure will be clearly described below in conjunction with the accompanying drawings. Obviously, the described embodiments are parts of, but not all of, the embodiments the present disclosure. All other embodiments obtained by those of ordinary skill in the art based on the embodiments of the present disclosure without any creative work shall fall within the protection scope of the present disclosure.

At present, a triangular groove structure is etched at the Rowland circle or arrayed waveguide of the AWG chip, the design of which meets the following formula:

$$\frac{1}{\Delta L_{sio_2}} \cdot \frac{d}{dT}(n_{sio_2} \cdot \Delta L_{sio_2}) = k \frac{1}{\Delta L_{silicone}} \cdot \frac{d}{dT}(n_{silicone} \cdot \Delta L_{silicone}) \qquad (1)$$

Where $n_{siO2}$ represents a silicon-based silicon dioxide waveguide, $n_{silicone}$ represents an effective refractive index of filling material, $\Delta n_{siO2}$ is a path length difference of the arrayed waveguide, $\Delta L_{silicone}$ is a groove width difference between adjacent waveguides of the arrayed waveguide; and T represents a temperature.

The wavelength drift caused by the chip waveguide and that caused by the negative optical material with temperature have the following relationship:

$$\frac{1}{\Delta L_{sio_2}} \cdot \frac{d}{dT}(n_{sio_2} \cdot \Delta L_{sio_2}) = k \frac{1}{\Delta L_{silicone}} \cdot \frac{d}{dT}(n_{silicone} \cdot \Delta L_{silicone}) \qquad (2)$$

Where k is a proportional coefficient and is related to the selected filling material. In practical applications, the refractive index of silicon-based silicon dioxide waveguides has high-order coefficients varying with temperature, and the wavelength drift $d\lambda/dT$ shows a nonlinear variation, that is, a difference between the variation value caused from a low temperature to a normal temperature (-40°C to 25°C) and the variation value caused from a normal temperature to a high temperature (25°C ~ 85°C) is about 0.04nm. From formulas (1) and (2) and the drift value of the center wavelength of the silicon-based silicon dioxide waveguide with temperature, the variation of the center wavelength $d\lambda$ with temperature

T can be approximately deferred, and the compensation coefficient $\dfrac{d\lambda'}{dT}$ ($\lambda$' is an output wavelength after the compensation) is obtained, then it can be ensured that within a certain temperature range, the chip-level AWG can control the wavelength accuracy through its own structure adjustment.

The variation of center wavelength $\lambda$ of the AWG chip itself with the temperature T is nonlinear, as shown in formula (3):

$$d\lambda = a*dT^2 + b*dT + c \qquad (3)$$

Where a, b, and c respectively represent a second-order coefficient, a first-order coefficient and a constant of the function indicating the variation of the center wavelength with temperature in the above formula.

For the AWG chip, in whose optical path a special process is adopted, in general, a triangular groove is arranged in the optical path and filled with a polymer material only once, accordingly, only the first-order term of the variation of the center wavelength with temperature can be compensated, however, the second-order term cannot be compensated.

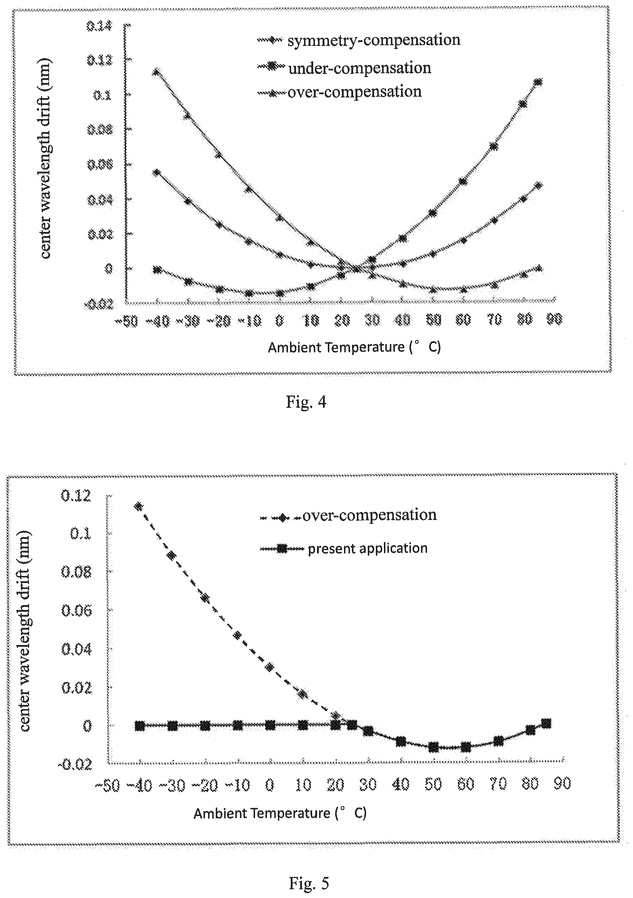

The compensated center wavelength-temperature curve is a parabola with an opening upward, and the selected material has a certain compensation suppression range. As shown in Fig. 4, when the chip-level AWG is centered at a normal temperature 25°C, within a range of -40 ~ 85°C, it is symmetrical compensation if the center wavelength drift value within a range of -40 ~ 25 ° C and that within a range of 25 ~ 85 ° C are the same, namely the compensation coefficient $\dfrac{d\lambda'}{dT}$ is equal to b; it is over-compensation if the center wavelength drift value within -40 ~ 25°C is greater than that within 25 ~ 85°C, that is, the compensation coefficient $\dfrac{d\lambda'}{dT}$ is greater than b; and it is under-compensation if the center wavelength drift value within -40 ~ 25°C is less than that within 25 ~ 85°C, that is, the compensation coefficient $\dfrac{d\lambda'}{dT}$ is less than b.

Obviously, for the AWG chip with specially processed chip optical path, it usually meets only the working environment with a commercial temperature, that is, it enables that the temperature is within a range of -5°C to 65°C, and the center wavelength variation is about 40pm. Therefore, this method can maintain wavelength stability only within a limited working temperature range, however, when the working environment temperature is extended to -40°C to 85°C, for denser wavelength division multiplexing systems with channel spacing above 100G, the accuracy is obviously insufficient. This problem also exists in other chip-level AWG chips that are filled with organic materials or structured in the waveguide design resulting in an opposite temperature coefficient to that of the waveguide.

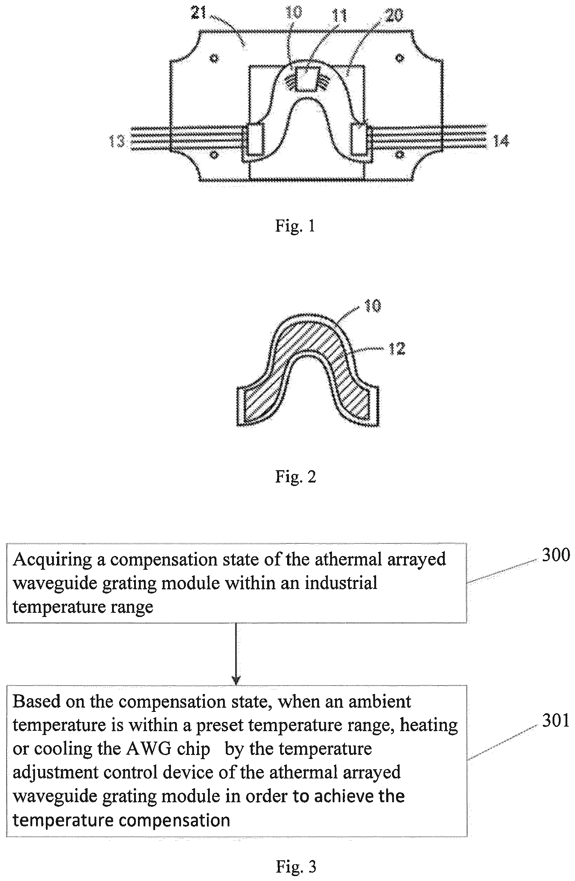

Fig. 1 is a schematic diagram of the structure of an athermal arrayed waveguide grating module according to an embodiment of the present disclosure. The athermal arrayed waveguide grating module shown in Fig. 1, comprises:

an AWG chip 10, on the back surface of which a metal electrode 12 is provided, please refer to Fig. 2;

a temperature adjustment control device, which is electrically connected to the metal electrode 12, and used to calculate a working temperature of the AWG chip based on a resistance value of the metal electrode 12, and within a preset temperature range of an industrial temperature range, adjust the working temperature of the AWG chip to a target temperature or maintain it within a predetermined range of the target temperature.

Referring to Fig. 1, an optical path portion of the AWG chip 10 is provided with one or more triangular grooves 11. Input ends of the AWG chip are coupled with a single-core optical fiber array as an input optical fiber array 13, and output ends of the AWG chip are coupled with a multi-core optical fiber array as an output optical fiber array 14. The temperature adjustment control device is only in contact with the AWG chip 10 while no contact with the single-core optical fiber array and the multi-core optical fiber array. Therefore, the temperature adjustment control device only performs chip-level temperature adjustment on the AWG chip 10 without affecting related components of the AWG chip, such as the input optical fiber array, the output fiber array, etc.

When the AWG chip is at different working temperatures, the metal electrode on the back surface of the AWG chip will exhibit different resistance values, and the temperature adjustment control device can calculate the working temperature of the AWG chip through the resistance value of the metal electrode and adjust it within the preset temperature range. If the calculated working temperature of the AWG chip is high, the AWG chip will be cooled; if the calculated working temperature of the AWG chip is low, the AWG chip will be heated, and finally the working temperature of the AWG chip will be adjusted to the target temperature or a predetermined range of the target temperature, for example, when the target temperature is -5°C, the working temperature of the AWG chip can be adjusted to -5°C, or -4.5°C or -5.5°C; or the target temperature is any value between -5°C and -65°C, and the working temperature of the AWG chip is maintained within the range of -5°C and -65°C.

The specific target temperature and target temperature range can be determined according to the requirements of wavelength drift control. When the working temperature of the AWG chip is close to the target temperature or is maintained within the target temperature range, the wavelength drift of the AWG chip is small and a stable wavelength can be output to meet the needs of industrial applications.

The industrial temperature range in the embodiments of the present disclosure may be a temperature range of -40°C to 85°C, and the preset temperature range is a temperature range within the industrial temperature range. There may be multiple specific preset temperature ranges, that is, the industrial temperature range is divided into multiple temperature sections, so that the temperature adjustment control device can heat or cool the AWG chip in different temperature sections.

In the athermal arrayed waveguide grating module provided by an embodiment of the present disclosure, by providing the metal electrode on the back surface of the AWG chip which is connected to the temperature adjustment control device, the temperature adjustment control device can calculate the working temperature of the AWG chip through the resistance value of the metal electrode, and then can adjust the AWG chip by uniformly heating or cooling the entire AWG chip, so as to realize the temperature adjustment and monitoring of the chip-level AWG chip.

Preferably, the metal electrode on the back surface of the AWG chip 10 and the temperature control device are fixedly bonded by conductive glue, thereby fixing the AWG chip on the temperature control device. Preferably, the material of the metal electrode is a titanium-tungsten alloy.

The AWG chip of embodiments of the present disclosure is fixed on the temperature control device, and the temperature control device is only in contact with the AWG chip, therefore, a uniform heating or cooling processing is performed for the entire AWG chip at chip level, keeping away from the input waveguide and output waveguide namely single-core or multi-core fiber array, to realize chip-level temperature compensation.

Based on the above embodiments, the temperature adjustment control device includes an optical path base 20 and a circuit control portion 21 provided on the optical path base 20.

A thermal expansion coefficient of the optical path base 20 is equal to or approximately equal to that of the material of the AWG chip 10.

The circuit control portion 21 is used to detect the resistance value of the metal electrode 12, calculate the working temperature of the AWG chip 10 according to the resistance value, and heat or cool the AWG chip within a preset temperature range of the industrial temperature range to adjust the working temperature of the AWG chip 10, so that the working temperature of the AWG chip 10 is adjusted to a target temperature or maintained within a predetermined range of the target temperature.

The thermal expansion coefficient of the optical path base of the temperature adjustment control device of the embodiment of the present disclosure and that of the material of the AWG chip are equal or approximately equal, in this way, when the temperature varies, on the chip, there will be no stress and deformation which may be caused by inconsistent thermal deformation, so the optical path base will not affect the wavelength stability of the AWG chip. The circuit control portion of the temperature adjustment control device is mainly used for detecting, calculating and adjusting temperatures, including detection of the resistance values of the metal electrode, calculation of the working temperature of the AWG chip on the basis of the resistance values, and determination of heating, cooling of the AWG chip or not processing the AWG chip on the ground of the specific temperature range of the working temperature of the AWG chip, so that the working temperature of the AWG chip is close to the target temperature or maintained within the target temperature range to meet the requirements of wavelength drift control in industrial applications.

Fig. 3 is a schematic flowchart of a wide temperature compensation method for an athermal arrayed waveguide grating module according to an embodiment of the present disclosure. A wide temperature compensation method based on the above athermal arrayed waveguide grating module compromises:

Step 300, acquiring a compensation state of the athermal arrayed waveguide grating module within an industrial temperature range;

Step 301, based on the compensation state, when an ambient temperature is within a preset temperature range, adjusting a working temperature of the AWG chip to a target temperature or maintaining it within a predetermined range of the target temperature by the temperature adjustment control device of the athermal arrayed waveguide grating module;

wherein the preset temperature range is a temperature range within the industrial temperature range.

Specifically, the industrial temperature range in the embodiment of the present disclosure may be a temperature range of -40°C to 85°C, and the preset temperature range is a temperature range within the industrial temperature range. There may be multiple specific preset temperature ranges, that is, the industrial temperature range is divided into multiple temperature sections, so that the temperature adjustment control device can heat or cool the AWG chip in different temperature sections.

Assuming that the target temperature is -5°C, the working temperature of the AWG chip can be adjusted to -5°C, or -4.5°C or -5.5°C; or the target temperature is any value between -5 and -65°C, and the working temperature of the AWG chip can be maintained within the range of -5 to -65°C.

Fig. 4 is a schematic diagram of the wavelength drift curve of an arrayed waveguide grating module of the prior art in the industrial temperature range. From Fig. 4 and the above formula (3), it can be seen that there are three compensation states for the arrayed waveguide grating module, including symmetrical compensation and under-compensation and over-compensation.

The symmetrical compensation satisfies that the compensation coefficient $\frac{d\lambda'}{dT}$ is equal to b, where dλ' is a variation of the center wavelength caused by a temperature variation, dT is the temperature variation, and b is the first-order coefficient of the function of the variation of the chip center wavelength λ over temperature T. When the athermal arrayed waveguide grating module is symmetrically compensated within the industrial temperature range, it has a good compensation effect at only -5 ~ 65°C, and a poor compensation effect at -40 ~ -5°C and 65 ~ 85°C sections.

The under-compensation satisfies that $\dfrac{d\lambda'}{dT}$ is greater than b, where dλ' is a variation of the center wavelength change caused by a temperature change, dT is the temperature variation, and b is the first-order coefficient of the function of the variation of the chip center wavelength λ over temperature T. When the athermal arrayed waveguide grating module is under-compensation within the industrial temperature range, it has a good compensation effect at -40 ~ 25°C, and a poor compensation effect at 25 ~ 85°C.

The over-compensation satisfies that $\dfrac{d\lambda'}{dT}$ is less than b, where dλ' is a variation of the center wavelength caused by a temperature variation, dT is the temperature variation, and b is the first-order coefficient of the function of the variation of the chip center wavelength λ over temperature T. When the athermal arrayed waveguide grating module is over-compensated in the industrial temperature range, it has a good compensation effect at 25 ~ 85°C, and a poor compensation effect at -40 ~ 25°C.

For different compensation states, their compensation effects are different in different temperature ranges. After the compensation state is obtained in embodiments of the present disclosure, different temperature adjustment strategies can be adopted in different temperature ranges on the basis of different compensation states, that is, the AWG chip of the athermal arrayed waveguide grating module may be heated or cooled, so that the athermal arrayed waveguide grating module is always close to the target temperature or within the target temperature range in which a good compensation effect can be achieved.

In the wide temperature compensation method for an athermal arrayed waveguide grating module provided in an embodiment of the present invention, according to different compensation states of the athermal arrayed waveguide grating module in the industrial temperature range, when the athermal arrayed waveguide grating module is within a preset temperature range of the industrial temperature range, the AWG chip of the athermal arrayed waveguide grating module is heated or cooled by the temperature adjustment control device of the athermal arrayed waveguide grating module. For the temperature adjustment control of the chip-level AWG assembly within an industrial temperature range, compared to a mode that a thermal AWG requires to be thermostatically processed on the entire module within the entire working temperature range, the method of the embodiments of the present disclosure performs the processing within the preset temperature range, resulting in a lower power consumption and a faster response speed, such that the control accuracy of wavelength drift is adaptable to a wider temperature range and could meet the needs of industrial applications.

Based on the foregoing embodiment, for step 301, based on the compensation state, when a ambient temperature is within a preset temperature range, adjusting a working temperature of the AWG chip to a target temperature or maintaining it within a predetermined range of the target temperature by the temperature adjustment control device of the athermal arrayed waveguide grating module, specifically comprises:

detecting the resistance value of the metal electrode by the temperature adjustment control device of the athermal arrayed waveguide grating module;
calculating the working temperature of the AWG chip according to the resistance value;
based on the compensation state, when the ambient temperature is within one or more preset temperature ranges, heating or cooling the AWG chip by the temperature adjustment control device to adjust the working temperature of the AWG chip to the target temperature or maintain it within a predetermined range of the target temperature.

In the athermal arrayed waveguide grating module of embodiments of the present disclosure, the metal electrode on the back surface of the AWG chip is connected to the temperature adjustment control device, and the working temperature of the AWG chip can be calculated once the resistance value of the metal electrode is detected,.

Based on the above analysis of the compensation states, that is, in the case of the symmetrical compensation, the compensation effect is good at only -5 ~ 65°C, and is poor in the temperature sections of -40 ~ -5°C and 65 ~ 85°C; in the case of the under-compensation, the compensation effect is good at -40 ~ 25°C, and is poor at 25 ~ 85°C; and in the case of the over-compensation, the compensation effect is good at 25 ~ 85°C, and is poor at -40 ~ 25°C. Therefore, in the symmetrical compensation state, the AWG chip can be temperature-compensated in the two temperature ranges of -40 to -5°C and 65 to 85°C; in the under-compensation state, the AWG chip can be temperature-compensated in the temperature range of 25 to 85°C; and in the over-compensation state, the AWG chip is temperature-compensated in the temperature range of - 40 ~ 25°C, so that the working temperature of the AWG chip is close to the target temperature or maintained in the target temperature range, and then the wavelength drift can be controlled.

The wide temperature compensation in different compensation states is described hereinafter.

Based on the foregoing embodiment, the compensation state includes an over-compensation state; correspondingly,

In step 301, based on the compensation state, when the ambient temperature is within one or more preset temperature ranges, heating or cooling the AWG chip by the temperature adjustment control device to adjust the working temperature of the AWG chip to the target temperature or maintain it within a predetermined range of the target temperature, specifically comprises:

based on the over-compensation state, when the ambient temperature is in a range of -40 to -5°C, heating the AWG chip by the temperature adjustment control device, so that the working temperature of the AWG chip approaches -5 °C.

Based on the foregoing analysis, in the over-compensation state, the AWG chip can be temperature-compensated in the temperature range of -40 to 25°C.

In the embodiment of the present disclosure, for the over-compensation state, temperature compensation is performed when the ambient temperature is only within the range of -40 to -5°C. The specific temperature compensation is that the AWG chip is heated only by the temperature adjustment control device, so that the actual working temperature of the AWG chip is controlled at about -5°C. When the actual working temperature of the AWG chip is at - 5°C, the AWG chip has a small wavelength drift and can meet industrial applications.

Further, when the working temperature of the AWG chip is in a range of -5 to 25°C, the temperature can still be further adjusted by the temperature adjustment control device to further heat the AWG chip, so that the actual working temperature of the AWG chip is close to 25°C, under this case, the wavelength drift of the AWG chip is smaller, and the wavelength drift control is close to the best effect.

Fig. 5 is a schematic diagram of comparison of wavelength drift curves in the over-compensation state within the industrial temperature range before and after wide temperature compensation according to embodiments of the present invention. Comparing the relationship curve between the center wavelength drift and the temperature after the width compensation according to embodiments of the present disclosure, with the relationship curve between the center wavelength drift and the temperature without using the method of the present disclosure, it can be seen that this method can effectively control the wavelength drift of the AWG chip within the industrial temperature range, and meet the needs of industrial applications.

Based on the foregoing embodiments, the compensation state includes an under-compensation state; correspondingly,

In step 301, based on the compensation state, when the ambient temperature is within one or more preset temperature ranges, heating or cooling the AWG chip by the temperature adjustment control device to adjust the working temperature of the AWG chip to the target temperature or maintain it within a predetermined range of the target temperature, specifically comprises:

based on the under-compensation state, when the ambient temperature is in a range of 65°C to 85°C, cooling the AWG chip by the temperature adjustment control device to maintain the working temperature of the AWG chip below 65°C.

Based on the foregoing analysis, in the under-compensation state, the AWG chip can be temperature-compensated in the temperature range of 25 to 85°C.

In the embodiment of the present invention, for the under-compensation state, the temperature compensation is performed when the ambient temperature is only in the range of 65 to 85°C. The specific temperature compensation is to cool the AWG chip only by the temperature adjustment control device, so that the actual working temperature of the AWG chip is controlled below 65°C. When the actual working temperature of the AWG chip is below 65°C, the wavelength drift of the AWG chip is small and the AWG chip can meet industrial applications.

Furthermore, when the working temperature of the AWG chip is within a range of 25 to 65°C, the temperature can still be further adjusted by the temperature adjustment control device, and the temperature of the AWG chip can be further cooled, so that the actual working temperature of the AWG chip is close to 25°C, under this case, the wavelength drift of the AWG chip is smaller, and the wavelength drift control is close to the best effect.

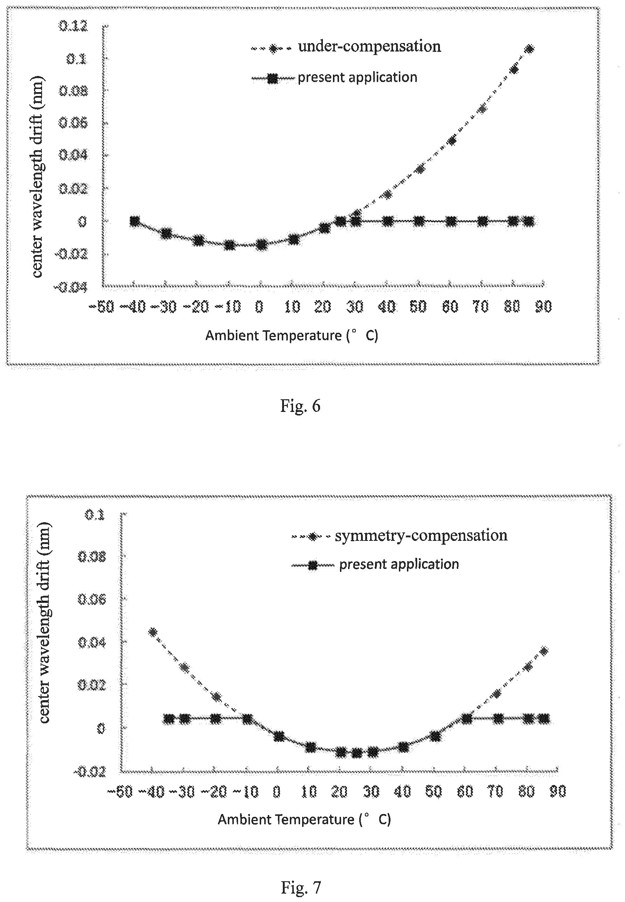

FIG. 6 is a schematic diagram of comparison of wavelength drift curves in the under-compensation state within the industrial temperature range before and after wide temperature compensation according to an embodiment of the present invention. Comparing the relationship curve between the center wavelength drift and the temperature after the width compensation of the embodiment of the present disclosure, with the relationship curve between the center wavelength drift and the temperature without using the method of the present application, it can be seen that this method can effectively control the wavelength drift of the AWG chip within the industrial temperature range, and meet the needs of industrial applications.

Based on the above embodiment, the compensation state includes a symmetrical compensation state; correspondingly,

In step 301, based on the compensation state, when the ambient temperature is within one or more preset temperature ranges, heating or cooling the AWG chip by the temperature adjustment control device to adjust the working temperature of the AWG chip to the target temperature or maintain it within a predetermined range of the target temperature, specifically comprises:

based on the symmetry compensation state, when the ambient temperature is in a range of -40 to -5°C, heating the AWG chip by the temperature adjustment control device to maintain the working temperature of the AWG chip above -5°C; and when the ambient temperature is in a range of 65 to 85°C, cooling the AWG chip by the temperature adjustment control device to maintain the working temperature of the AWG chip below 65°C;

when the working temperature of the AWG chip is in a range of -5°C to 65°C, adjusting the wavelength through the structure of the AWG chip of the athermal arrayed waveguide grating module, to achieve wavelength compensation control.

Based on the foregoing analysis, in the symmetrical compensation state, the AWG chip can be temperature-compensated in two temperature ranges of -40 to -5°C and 65 to 85°C.

When the embodiment of the present invention is in the symmetrical compensation state, if the working environment temperature always alternates between high and low temperatures, that is, it alternates between the low temperature region of -40°C to -5°C and the high temperature region of 65°C to 85°C, the temperature compensation is performed in the two temperature ranges respectively. The specific temperature compensation is that, in the low temperature range of -40 to -5°C, the AWG chip is heated by the temperature adjustment control device, so that the actual working temperature of the AWG chip is controlled at about-5 °C; in the high temperature region 65-85 °C, the AWG chip is cooled by the temperature adjustment control device, so that the working temperature of the AWG chip is maintained below 65 °C.

Through the above temperature adjustment to the AWG chip in the low temperature region and the high temperature region, the actual working temperature of the AWG chip can be maintained in the range of -5 to 65°C.

Further, when the working temperature of the AWG chip is in the range of -5°C to 65°C, the wavelength can be adjusted through the structure of the AWG chip of the athermal arrayed waveguide grating module to achieve precise wavelength control. Specifically, the wavelength can be adjusted through the triangular groove in the optical path part of the AWG chip.

FIG. 7 is a schematic diagram of comparison of wavelength drift curves in the symmetrical compensation state within the industrial temperature range before and after wide temperature compensation according to an embodiment of the present invention. Comparing the relationship curve between the center wavelength drift and the temperature after the width compensation of the embodiment of the present disclosure, with the relationship curve between the center wavelength drift and the temperature without using the method of the present application, it can be seen that through the method, the wavelength drift of the AWG chip can be effectively controlled within the industrial temperature range and the AWG chip meet the needs of industrial applications.

In summary, in the embodiments of the present disclosure, there are provided an athermal arrayed waveguide grating module and a wide temperature compensation method based on the athermal arrayed waveguide grating module, which have the following beneficial effects:

In embodiments of the present disclosure, the wavelength drift is further controlled based on the commercial temperature application of the athermal AWG chip, so that the control accuracy of wavelength drift can adapt to a wider temperature range; temperature adjustment is performed only for the chip-level AWG assembly within the industrial temperature range, thus, compared to the mode that the thermal AWG requires a constant temperature treatment on the entire module within the entire working temperature range, the power consumption is lower and the response speed is faster; the chip-level athermal AWG device is more mature, and in the embodiments of the present disclosure, it is necessary to only perform subsection temperature control based on the prior art, which is relatively easy to implement and can meet industrial production and application requirements.

Finally, it should be noted that the above embodiments are only used for illustrating the technical solutions of the present invention, rather than limiting it; although the present invention has been described in detail with reference to the foregoing embodiments, it is obvious to those of ordinary skill in the art that the technical solutions recorded in the foregoing embodiments can be modified, or some of the technical features therein can be equivalently replaced, and these modifications or replacements do not cause the essence of the corresponding technical solutions to deviate from the spirit and scope of the technical solutions of the embodiments of the present invention.

**Claims**

1. An athermal arrayed waveguide grating module, **characterized in** comprising:

an AWG chip, on a back surface of which a metal electrode is provided;
a temperature adjustment control device, which is electrically connected to the metal electrode, and is used to calculate a working temperature of the AWG chip based on a resistance value of the metal electrode, and within a preset temperature range of an industrial temperature range, adjust the working temperature of the AWG chip to a target temperature or maintain it within a predetermined range of the target temperature.

2. The athermal arrayed waveguide grating module of claim 1, wherein the metal electrode and the temperature adjustment control device are fixedly bonded by conductive glue to fix the AWG chip on the temperature control device.

3. The athermal arrayed waveguide grating module of claim 1 or 2, wherein the temperature adjustment control device comprises an optical path base and a circuit control portion arranged on the optical path base;
a thermal expansion coefficient of the optical path base is equal to or approximately equal to that of a material of the AWG chip;
the circuit control portion is used to detect the resistance value of the metal electrode, calculate the working temperature of the AWG chip according to the resistance value, and heat or cool the AWG chip within the preset temperature range of the industrial temperature range, to adjust the working temperature of the AWG chip.

4. The athermal arrayed waveguide grating module of claim 1, wherein a material of the metal electrode is a titanium-tungsten alloy.

5. A wide temperature compensation method based on the athermal arrayed waveguide grating module of any one of claims 1-4, **characterized in** comprising:

Step 300, acquiring a compensation state of the athermal arrayed waveguide grating module within an industrial temperature range;
Step 301, based on the compensation state, when an ambient temperature is within a preset temperature range, adjusting a working temperature of the AWG chip to a target temperature or maintaining it within a predetermined range of the target temperature by the temperature adjustment control device of the athermal arrayed waveguide grating module;
wherein the preset temperature range is a temperature range within the industrial temperature range.

6. The method of claim 5, wherein step 301 specifically comprises:

detecting a resistance value of the metal electrode by the temperature adjustment control device of the athermal arrayed waveguide grating module;
calculating the working temperature of the AWG chip according to the resistance value;
based on the compensation state, when the ambient temperature is within one or more preset temperature ranges, heating or cooling the AWG chip by the temperature adjustment control device to adjust the working temperature of the AWG chip to the target temperature or maintain it within the predetermined range of the target temperature.

7. The method of claim 5 or 6, wherein the compensation state comprises an over-compensation state, and correspondingly, step 301 specifically comprises:
based on the over-compensation state, when the ambient temperature is in a range of -40 to -5°C, heating the AWG chip by the temperature adjustment control device, so that the working temperature of the AWG chip is close to -5 °C.

8. The method according to claim 5 or 6, wherein the compensation state comprises an under-compensation state, and correspondingly, step 301 specifically comprises:
based on the under-compensation state, when the ambient temperature is in a range of 65°C to 85°C, cooling the AWG chip by the temperature adjustment control device, so that the working temperature of the AWG chip is maintained below 65°C.

9. The method of claim 5 or 6, wherein the compensation state comprises a symmetrical compensation state, and correspondingly, step 301 specifically comprises:

based on the symmetrical compensation state, when the ambient temperature is in a range of -40 to -5°C, heating the AWG chip by the temperature adjustment control device, so that the working temperature of the AWG chip is maintained above -5°C; when the ambient temperature is in a range of 65 to 85°C, cooling the AWG chip by the temperature adjustment control device, so that the working temperature of the AWG chip is maintained below 65°C;
when the working temperature of the AWG chip is in a range of -5°C to 65°C, performing a wavelength adjustment by the AWG chip of the athermal arrayed waveguide grating module to achieve wavelength compensation control.

Fig. 1

Fig. 2

| Acquiring a compensation state of the athermal arrayed waveguide grating module within an industrial temperature range | 300 |

| Based on the compensation state, when an ambient temperature is within a preset temperature range, heating or cooling the AWG chip  by the temperature adjustment control device of the athermal arrayed waveguide grating module in order to achieve the temperature compensation | 301 |

Fig. 3

Fig. 4

Fig. 5

EP 3 812 808 A1

Fig. 6

Fig. 7

## INTERNATIONAL SEARCH REPORT

| International application No. |
| --- |
| **PCT/CN2018/123421** |

**A. CLASSIFICATION OF SUBJECT MATTER**

G02B 6/12(2006.01)i

According to International Patent Classification (IPC) or to both national classification and IPC

**B. FIELDS SEARCHED**

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNPAT, CNKI, EPODOC, WPI, USTXT, WOTXT: 光迅科技, 吴凡, 凌九红, 李长安, 胡家艳, 孔祥健, 无热, 阵列, 光栅, 波导, AWG, 电极, 阻值, 温度, 范围, 调节, 控制, 热膨胀, 补偿, array, waveguide, grating, electrode, pole, temperature, range, adjust, control, expand, compensate

**C. DOCUMENTS CONSIDERED TO BE RELEVANT**

| Category* | Citation of document, with indication, where appropriate, of the relevant passages | Relevant to claim No. |
| --- | --- | --- |
| PX | CN 108828713 A (ACCELINK TECHNOLOGY CO., LTD.) 16 November 2018 (2018-11-16) claims 1-9, description, paragraphs [0008]-[0096], and figures 1-7 | 1-9 |
| X | CN 107562084 A (ACCELINK TECHNOLOGY CO., LTD.) 09 January 2018 (2018-01-09) description, paragraphs [0007]-[0081], and figures 1-9 | 1-9 |
| A | CN 201812050 U (O-NET TECHNOLOGIES (SHENZHEN) CO., LTD.) 27 April 2011 (2011-04-27) entire document | 1-9 |
| A | CN 106371172 A (WUXI HI-NANO TECH CO., LTD.) 01 February 2017 (2017-02-01) entire document | 1-9 |
| A | CN 101576637 A (ACCELINK TECHNOLOGIES CO., LTD.) 11 November 2009 (2009-11-11) entire document | 1-9 |
| A | US 9465162 B2 (LUMENTUM OPERATIONS L.L.C.) 11 October 2016 (2016-10-11) entire document | 1-9 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 March 2019** | **27 March 2019** |

| Name and mailing address of the ISA/CN | Authorized officer |
| --- | --- |
| **State Intellectual Property Office of the P. R. China (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2018/123421** |

**C.      DOCUMENTS CONSIDERED TO BE RELEVANT**

| Category* | Citation of document, with indication, where appropriate, of the relevant passages | Relevant to claim No. |
|---|---|---|
| A | JP 2005148585 A (NIPPON TELEGRAPH & TELEPHONE CORPORATION) 09 June 2005 (2005-06-09)<br>     entire document | 1-9 |

Form PCT/ISA/210 (second sheet) (January 2015)

**INTERNATIONAL SEARCH REPORT**
Information on patent family members

International application No.

**PCT/CN2018/123421**

| Patent document cited in search report | | | Publication date (day/month/year) | Patent family member(s) | | | Publication date (day/month/year) |
|---|---|---|---|---|---|---|---|
| CN | 108828713 | A | 16 November 2018 | None | | | |
| CN | 107562084 | A | 09 January 2018 | None | | | |
| CN | 201812050 | U | 27 April 2011 | None | | | |
| CN | 106371172 | A | 01 February 2017 | None | | | |
| CN | 101576637 | A | 11 November 2009 | CN | 101576637 | B | 29 September 2010 |
| US | 9465162 | B2 | 11 October 2016 | US | 2014294347 | A1 | 02 October 2014 |
| | | | | US | 2016097899 | A1 | 07 April 2016 |
| | | | | US | 9213138 | B2 | 15 December 2015 |
| JP | 2005148585 | A | 09 June 2005 | JP | 4184931 | B2 | 19 November 2008 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810637390